# EUROPEAN PATENT SPECIFICATION

(11) **EP 0 602 935 B1**
(45) Date of publication and mention of the grant of the patent: **30.07.1997**
(21) Application number: 93310074.5
(22) Date of filing: 14.12.1993
(51) Int. Cl.: B62B 9/10, B60N 2/28

(54) **Infant-care apparatus**
Vorrichtung zum Kinderpflege
Dispositif de soin d'enfant

(30) Priority: 15.12.1992 JP 334484/92; 16.11.1993 JP 286735/93
(43) Date of publication of application: 22.06.1994
(73) Proprietor: APRICA KASSAI KABUSHIKI KAISHA, Osaka (JP)
(72) Inventor: Kassai, Kenzou, Osaka (JP)
(74) Representative: Abbie, Andrew Kenneth

(56) References cited:
- EP-A- 0 481 452
- DE-A- 3 405 210
- GB-A- 2 183 470
- US-A- 4 434 513

## Description

The invention relates to infant-care apparatus in which an infant (i.e. a baby or child) may be sat or laid down. Such an apparatus may be fixed to support an infant in a sitting position or alternatively may be fixed to support an infant in a lying position or alternatively may be adjustable to support an infant in either a sitting or a lying position. Particularly, but not exclusively, the invention relates to a baby carriage or child safety seat for an automobile comprising such apparatus.

Typically, a baby carriage or child safety seat comprises such infant-care apparatus in the form of a so-called seat-type bed which has hinged upper and lower body support portions so that it is adjustable for use as a seat or a cot.

An important consideration in the design of an infant-care apparatus (herein referred to as a nursing instrument) comprising a seat-type bed is safety for a baby or child. In order to improve such safety, EP-A-0481452, cited during substantive examination of this application, discloses an infant-care apparatus for supporting an infant comprising:
a lower body support portion (3) for supporting the lower body of an infant, an upper body support portion (4) for supporting the upper body of the infant, a pair of side walls (5,6) extending from respective side regions of said upper body support portion (4), an end wall (7) extending from an end region of said upper body support portion (4) between respective end regions of said side walls (5,6) and a cushion member (13, 13a, 13b, 13c) substantially covering said lower body support portion (3), said upper body support portion (4), said side walls (5,6) and said end wall (7).

DE-A-3405210, also cited during substantive examination of this application, discloses a similar seat-type bed, but wherein the lower body support, or seat, portion, the upper body support, or backrest, portion, the side walls and the end, or top, wall are disclosed as being cushioned and provided with a respective textile or plastics cover.

The side walls are adapted to prevent a baby or child from slipping sidewardly or falling from the seat-type bed, as well as to protect it against a side shock. On the other hand, the end, or top, wall is adapted to prevent the baby or child from slipping upwardly or falling from the seat-type bed, as well as to protect it against a shock which may be applied to the baby's or child's head from above.

Such nursing instruments are employed for a baby or child who is in a stage of remarkable cerebral development. Thus, it is necessary to protect the brain of such a baby or child with greater care as compared with an adult.

The backrest, portion, the side walls and the top wall which are positioned around the baby's or child's head also effectively contribute to protection of its brain. In order to attain higher safety, however, a nursing instrument must be provided with safety features which take into consideration various situations. For example, a baby carriage may run against some obstacle or overturn during movement. On the other hand, a baby or child chair, a cradle or a swing may collide with another child who is running about in the vicinity of such a nursing instrument. Further, in a baby or child safety seat which is used in an automobile it is necessary to take into consideration an accident, which may cause an unforeseeable situation.

While the aforementioned cushion members provide comfort for the baby or child, the portions covered with such cushion members may be so soft that they cannot cope effectively with a severe shock.

US-A-4434513, also cited during substantive examination of this application, discloses a protector for surrounding the head of an infant and comprising a roll having an outer layer surrounding a resilient but compressible material.

GB-A-2183470, also cited during substantive examination of this application, discloses a child's safety seat comprising a body having a backrest portion and a seat portion wherein, at a portion of the backrest located so as to support the back of the child's head, there are at least three cushion layers. The innermost layer does not deform when subjected to a small force but deforms when subjected to a severe force to absorb it. The intermediate layer deforms to absorb a relatively large force but cannot itself absorb a severe force, and the outermost layer is of soft material.

An object of the present invention is to provide an infant-care apparatus which can mitigate the effects of a severe shock applied to a baby's or child's head.

The invention provides infant-care apparatus for supporting an infant comprising:
a lower body support portion for supporting the lower body of an infant, an upper body support portion for supporting the upper body of the infant, a pair of side walls extending from respective side regions of said upper body support portion, an end wall extending from an end region of said upper body support portion between respective end regions of said side walls and a cushion member substantially covering said upper body support portion, said side walls and said end wall; characterized in that
each of said upper body support portion, said side walls and said end wall comprises a respective rigid wall member forming a cavity receiving a respective further cushion member behind said first-mentioned cushion member at areas thereof which are adjacent an infant's head in use of the apparatus, each said further cushion member having a larger coefficient of elasticity than said first-mentioned cushion member.

Preferably, said first-mentioned cushion member contains urethane foam or fiber aggregate, and each said further cushion member contains urethane chips, foamed polyethylene beads or polystyrene foam.

Preferably, said further cushion member is thicker than said first-mentioned cushion member.

The apparatus may comprise a still further cushion member interposed between said first-mentioned cushion member and at least one of said further cushion members, said still further cushion member having a coefficient of elasticity larger than that of said first-mentioned cushion member and smaller than that of said further cushion member or members.

The still further cushion member may be arranged to extend over an entire back surface of said first-mentioned cushion member.

Alternatively, the still further cushion member may be arranged only at or about regions of said upper body support portion and said side walls capable of contacting the infant's head in normal use and on said end wall.

Alternatively, the still further cushion member may be arranged only at or about a region of said upper body support portion capable of contacting the infant's head in normal use.

The first-mentioned, further and still further cushion members may respectively contain urethane foam, foamed polyethylene beads and urethane chips, or alternatively may contain fiber aggregate, polystyrene foam and urethane foam, or alternatively may contain fiber aggregate, urethane chips and urethane foam.

The first-mentioned cushion member preferably covers said lower body support portion, said upper body support portion, said side walls and said end wall.

The apparatus may comprise a seat-type bed for a baby carriage.

In order that the invention may be well understood, four embodiments thereof, which are given by way of example only, will now be described with reference to the accompanying drawings, in which:
Fig. 1 is a perspective view showing a baby carriage;
Fig. 2 is a cross sectional view showing a seat-type bed of the baby carriage through a backrest portion and side walls of the seat-type bed;
Fig. 3 is a longitudinal sectional view showing the seat-type bed through the backrest portion and a top wall thereof;
Fig. 4 is a longitudinal sectional view corresponding to Fig. 3, illustrating the backrest portion in a raised state;
Fig. 5 is a cross sectional view corresponding to Fig. 2, showing another seat-type bed;
Fig. 6 is a longitudinal sectional view corresponding to Fig. 3, illustrating the seat-type bed of Fig. 5;
Fig. 7 is a longitudinal sectional view corresponding to Fig. 3, showing still another seat-type bed; and
Fig. 8 is a longitudinal sectional view corresponding to Fig. 3, showing a further seat-type bed.

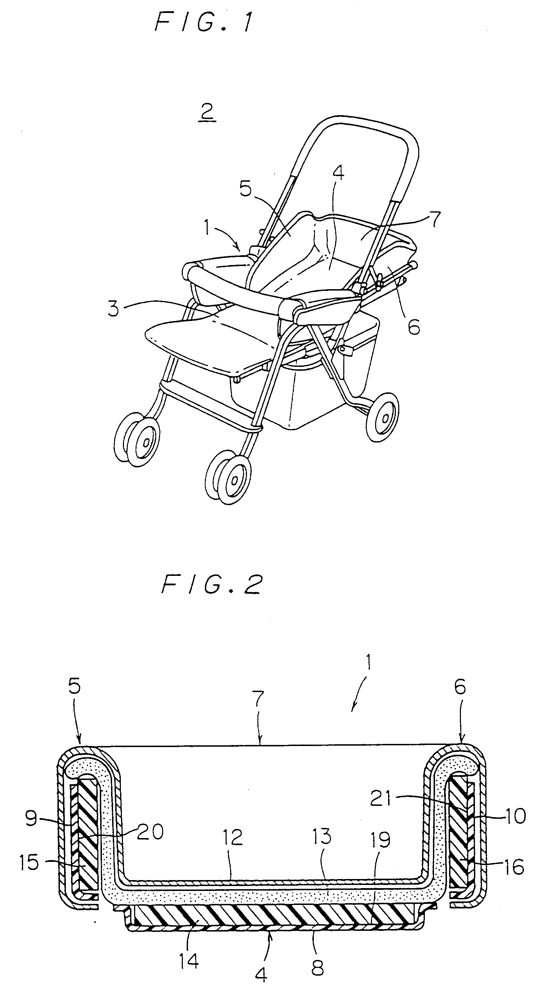

Fig. 1 is a perspective view showing nursing instrument for supporting an infant in the form of a baby carriage 2 comprising a seat-type bed 1. The seat-type bed 1 comprises a lower body support, or seat, portion 3 for supporting the lower half of a baby's or child's body, and an upper body support, or backrest, portion 4 for supporting the upper half of the baby's or child's body. A pair of side walls 5 and 6 extend upwardly from both side edges, or regions, of the backrest portion 4. Further, a top, or end, wall 7 extends upwardly from an upper edge, or end region, of the backrest portion 4. This top wall 7 couples respective upper edges, or end regions, of the pair of side walls 5 and 6 with each other.

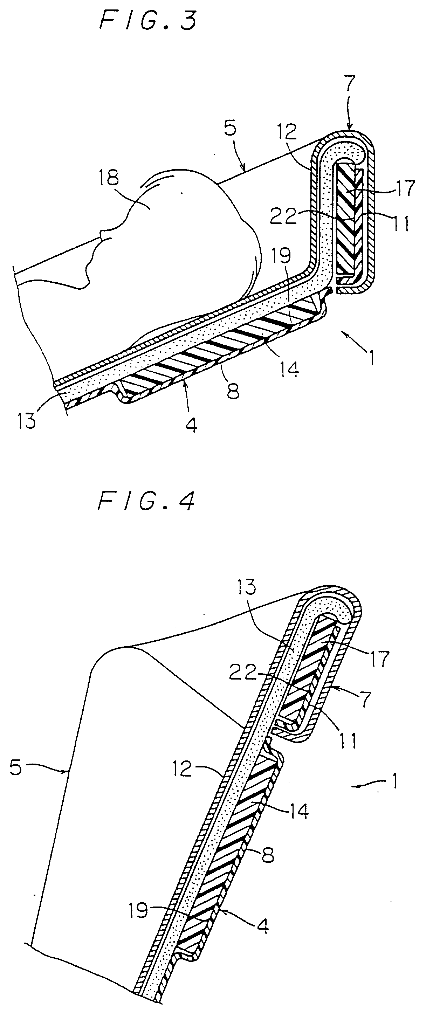

As shown in Figs. 2 and 3, the backrest portion 4, the side walls 5 and 6 and the top wall 7 comprise separate wall members, or holders, 8, 9, 10 and 11 of a rigid material such as hard plastic for keeping the backrest portion 4 and the walls 5, 6, 7 in shape. A facing 12 of cloth, for example, and a cushion member 13 are adapted to cover front surfaces of the backrest portion 4, the side walls 5 and 6 and the top wall 7. The cushion member 13 is arranged on the back side of the facing 12. This cushion member 13 is made of a soft material having a relatively small coefficient of elasticity, or elastic coefficient, such as urethane foam or fiber aggregate, for example. The cushion member 13 may be lined with the facing 12. The seat portion also comprises a holder, a cushion member and a facing. Alternately, the cushion member 13 may cover the seat portion 3, the backrest portion 4, the sidewalls 5, 6 and the top wall 7.

Further, or second, cushion members 14, 15, 16 and 17 are arranged behind and on the back side of the first-mentioned, or first, cushion member 13. These second cushion members 14 15, 16 and 17 are positioned at a region of the backrest portion 4 which can contact the baby's or child's head 18 in normal use (Fig. 3), at regions of the side walls 5 and 6 which can contact the baby's or child's head 18 in normal use, and at the top wall 7. The second cushion members 14 to 17 are made of a material having a larger elastic coefficient than the first cushion member 13, such as foamed polyethylene beads, polystyrene foam or urethane chips, for example.

The second cushion members 14 to 17 are preferably thicker than the first cushion member 13, to improve shock absorption. Further, the second cushion member 14 which is positioned at the backrest portion 4 is stored in a concave portion, or cavity, 19 which is formed in the holder 8, to avoid steps in the first cushion member 13 and the facing 12 located thereon. The other holders 9, 10 and 11 are also provided with respective concave portions 20, 21 and 22 having similar functions.

When the backrest portion 4 is reclined as shown in Fig. 3 to provide a bed, the top wall 7 stands upright from the backrest portion 4. When the backrest portion 4 is raised as shown in Fig. 4, on the other hand, the top wall 7 extends to be flush with the backrest portion 4. Such a structure is currently employed in many baby carriages, and a structure for automatically adjusting the angle of the top wall 7 in response to the angle of inclination of the backrest portion 4 is described in Japanese Patent Publications JP-5833148 and JP-5833149 (1983), for example.

When the backrest portion 4 is raised as shown in Fig. 4, the second cushion member 14 or 17 provided on the backrest portion 4 or the top wall 7 and the second cushion members 15 and 16 (not shown in Fig. 4) provided on the side walls 5 and 6 can protect the baby's or child's head 18.

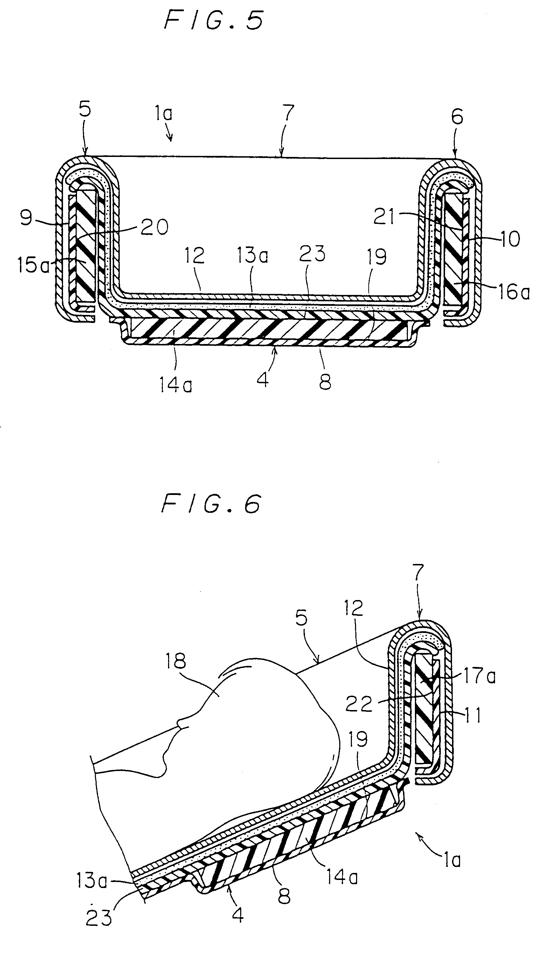

In Figs. 5 to 8, elements corresponding to those shown in Figs. 2 and 3 are denoted by similar reference numerals, to omit redundant description.

In the seat-type bed 1a of Figs. 5 and 6, a still further, or third, cushion member 23 is arranged between a first cushion member 13a and second cushion members 14a, 15a, 16a and 17a. This third cushion member 23 is arranged behind the first cushion member 13a so as to cover the entire back surface of the first cushion member 13a. The third cushion member 23 is made of a material having an elastic coefficient which is larger than that of the first cushion member 13a and smaller than that of the second cushion members 14a, 15a, 16a and 17a. Materials for the first cushion member 13a, the second cushion members 14a, 15a, 16a and 17a and the third cushion member 23 may be urethane foam, polyethylene beads and urethane chips respectively, or fiber aggregate, polystyrene foam and urethane foam respectively, or fiber aggregate, urethane chips and urethane foam respectively, for example.

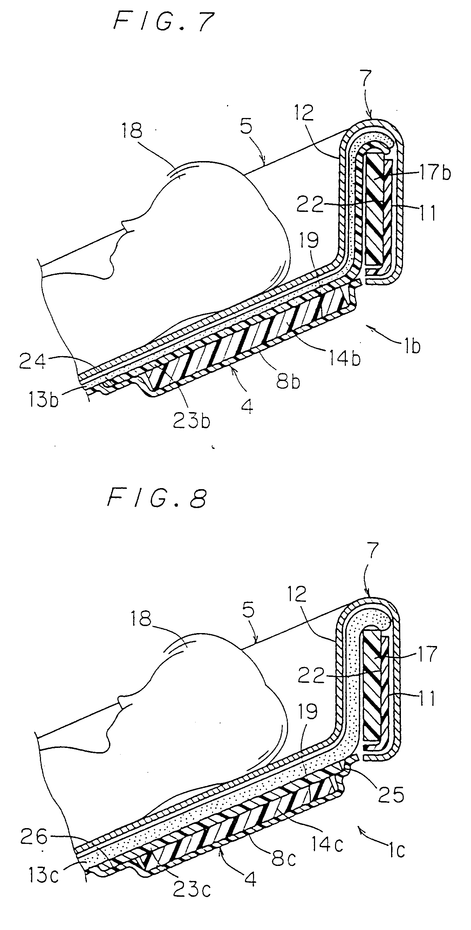

In the seat-type bed 1b shown in Fig. 7, a third cushion member 23b is arranged between a first cushion member 13b and second cushion members 14b and 17b. The third cushion member 23b is disposed only in the region of the second cushion members 14b and 17b, and is sized so as to jut out beyond a lower edge of the second cushion member 14b. A shallow cavity, or stepped portion, 24 is provided on a holder 8b for accommodating the thickness of the third cushion member 23b.

In the seat-type bed 1b of Fig. 7, the third cushion member 23b is disposed only in regions for receiving a baby's or child's head 18. Such a third cushion member 23b may be arranged to extend to regions of side walls 5 and 6 which can contact the baby's or child's head 18, similarly to the third cushion member 23 shown in Fig. 5, although such an arrangement is not shown in Fig. 7.

In the seat-type bed 1c of Fig. 8, a third cushion member 23c is arranged between a first cushion member 13c and a second cushion member 14c. The third cushion member 23c is disposed only in the region of the second cushion member 14c. The third cushion member 23c is sized so as to jut out beyond lower, upper and side edges of the second cushion member 14c respectively, and shallow cavities, or stepped portions, 25 and 26 are provided on a holder 8c for accommodating the thickness of the third cushion member 23c.

In the seat-type bed 1c of Fig. 8, the third cushion member 23c is arranged only in regions having a high possibility of contact with a baby's or child's head 18.

While the respective thicknesses of the first, second and third cushion members are shown schematically in Figs. 2 to 8, these thicknesses can be changed as desired.

More than three layers of cushion members may be provided.

In the seat-type beds 1, 1a, 1b, 1c of Figs. 3, 6, 7 and 8 substantially only the first cushion member 13, 13a, 13b, 13c is deformed in ordinary use, to provide comfort for the infant.

When a severe shock is applied, on the other hand, at least one of the second cushion members 14, 14a, 14b, 14c, 15, 15a, 16, 16a, 17, 17a, 17b is also deformed to effectively absorb the shock.

When the aforementioned third cushion member 23, 23a, 23b is arranged between the first 13a, 13b, 13c and second 14b, 14c, 15a, 16a, 17a, 17b cushion members, this third cushion member 23, 23a, 23b may be deformed substantially with no deformation of the second cushion member 14a, 14b, 14c, 15a, 16a, 17a, 17b, or both the second 14a, 14b, 14c, 15a, 16a, 17a, 17b and third 23, 23a, 23b cushion members may be deformed, depending on the level of the shock.

As will be apparent from the foregoing, using the seat-type bed 1, 1a, 1b or 1c of Fig. 3, 6, 7 or 8 it is possible to sufficiently protect an infant's head against a severe shock, and the infant's head may be enclosed by regions provided with respective second cushion members 14, 14a, 14b, 14c, 15, 15a, 16, 16a, 17, 17a, 17b. Even if the baby's or child's head is moved by a shock or of its own accord, therefore, the action of a second cushion member may be effected from one of several positions. Therefore, it is possible to further improve the safety of a nursing instrument comprising such a seat-type bed.

Further, the regions provided with respective second cushion members 14, 14a, 14b, 14c, 15, 15a, 16, 16a, 17, 17a, 17b are restricted to parts of the backrest portion 4 and the side walls 5, 6, and the top wall 7. Thus, it is possible to minimize the increase in size caused by use of the second cushion member or members 14, 14a, 14b, 14c, 15, 15a, 16, 16a, 17, 17a, 17b in addition to the first cushion member 13, 13a, 13b, 13c.

When the third cushion member 23, 23b, 23c is arranged between the first 13a, 13b, 13c and second 14a, 14b, 14c, 15a, 16a, 17a, 17b cushion members, it is possible to further improve reliability of the shock absorbing function.

The operation of the backrest portion 4 and the top wall 7 shown in figs. 3 and 4 is not essential to the present invention. In other words, the present invention is also applicable to a nursing instrument comprising a backrest portion 4 and top wall 7 which are fixed in the mode shown in Fig. 3.

Further, the present invention is not restricted to the aforementioned baby carriage, but is also applicable to other nursing instruments such as a baby or child chair, a cradle, a swing, or a baby or child safety seat for an automobile.

## Claims

1. Infant-care apparatus for supporting an infant comprising:
a lower body support portion (3) for supporting the lower body of an infant, an upper body support portion (4) for supporting the upper body of the infant, a pair of side walls (5,6) extending from respective side regions of said upper body support portion (4), an end wall (7) extending from an end region of said upper body support portion (4) between respective end regions of said side walls (5,6) and a cushion member (13, 13a, 13b, 13c) substantially covering said upper body support portion (4), said side walls (5,6) and said end wall (7); characterized in that
each of said upper body support portion (4), said side walls (5,6) and said end wall (7) comprises a respective rigid wall member (8, 8b, 8c, 9, 10, 11) forming a cavity (19, 20, 21, 22) receiving a respective further cushion member (14, 14a, 14b, 14c, 15, 15a, 16, 16a, 17, 17a, 17b) behind said first-mentioned cushion member (13, 13a, 13b, 13c) at areas thereof which are adjacent an infant's head in use of the apparatus, each said further cushion member (14, 14a, 14b, 14c, 15, 15a, 16, 16a, 17, 17a, 17b) having a larger coefficient of elasticity than said first-mentioned cushion member (13, 13a, 13b, 13c).

2. Infant-care apparatus as claimed in claim 1, wherein said first-mentioned cushion member (13, 13a, 13b, 13c) contains urethane foam or fiber aggregate, and each said further cushion member (14, 14a, 14b, 14c, 15, 15a, 16, 16a, 17, 17a, 17b) contains urethane chips, foamed polyethylene beads or polystyrene foam.

3. Infant-care apparatus as claimed in claim 1 or 2, wherein each said further cushion member (14, 14a, 14b, 14c, 15, 15a, 16, 16a, 17, 17a, 17b) is thicker than said first-mentioned cushion member (13, 13a, 13b, 13c).

4. Infant-care apparatus as claimed in claim 1, 2 or 3, further comprising a still further cushion member (23, 23b, 23c) interposed between said first-mentioned cushion member (13a, 13b, 13c) and at least one of said further cushion members (14a, 14b, 14c, 15a, 16a, 17a, 17b), said still further cushion member (23, 23b, 23c) having a coefficient of elasticity larger than that of said first-mentioned cushion member (13a, 13b, 13c) and smaller than that of said further cushion member or members (14a, 14b, 14c, 15a, 16a, 17a, 17b).

5. Infant-care apparatus as claimed in claim 4, wherein said still further cushion member (23) is arranged to extend over an entire back surface of said first-mentioned cushion member (13a).

6. Infant-care apparatus as claimed in claim 4, wherein said still further cushion member (23b) is arranged only at or about regions of said upper body support portion (4) and said side walls (5,6) capable of contacting the infant's head (18) in normal use and on said end wall (7).

7. Infant-care apparatus as claimed in claim 4, wherein said still further cushion member (23c) is arranged only at or about a region of said upper body support portion (4) capable of contacting the infant's head (18) in normal use.

8. Infant-care apparatus as claimed in any one of claims 4 to 7, wherein said first-mentioned (13a, 13b, 13c), further (14a, 14b, 14c, 15a, 16a, 17a, 17b) and still further (23, 23b, 23c) cushion members respectively contain urethane foam, foamed polyethylene beads and urethane chips.

9. Infant-care apparatus as claimed in any one of claims 4 to 7, wherein said first-mentioned (13a, 13b, 13c), further (14a, 14b, 14c, 15a, 16a, 17a, 17b) and still further (23, 23b, 23c) cushion members respectively contain fiber aggregate, polystyrene foam and urethane foam.

10. Infant-care apparatus as claimed in any one of claims 4 to 7, wherein said first-mentioned (13a, 13b, 13c), further (14a, 14b, 14c, 15a, 16a, 17a, 17b) and still further (23, 23b, 23c) cushion members respectively contain fiber aggregate, urethane chips and urethane foam.

11. Infant-care apparatus as claimed in any one of the preceding claims comprising a seat-type bed (1, 1a, 1b, 1c) for a baby carriage.

12. Infant-care apparatus as claimed in any one of the preceding claims, wherein said fist-mentioned cushion member (13, 13a, 13b, 13c) covers said lower body support portion (3), said upper body support portion, said side walls (5, 6) and said end wall (7).

## Patentansprüche

1. Kinderaufnahmevorrichtung zum Tragen eines Kindes, aufweisend:
einen unteren Körpertrageabschnitt (3) zum Tragen der unteren Körperteile eines Kindes, einen oberen Körpertrageabschnitt (4) zum Tragen der oberen Körperteile des Kindes, ein Paar von entsprechenden Seitenbereichen des oberen Körpertrageabschnitts (4) ausgehende Seitenwände (5, 6), eine von einem Endbereich des oberen Körpertrageabschnitts (4) zwischen entsprechenden Endbereichen der Seitenwände (5, 6) ausgehende Endwand (7) und ein Kissenelement (13, 13a, 13b, 13c), das den oberen Körpertrageabschnitt (4), die Seitenwände (5, 6) und die Endwand (7) im wesentlichen abdeckt;
dadurch gekennzeichnet,
daß der obere Körpertrageabschnitt (4), die Seitenwände (5, 6) und die Endwand (7) jeweils ein steifes Wandelement (8, 8a, 8c, 9, 10, 11) aufweisen, das einen Hohlraum (19, 20, 21, 22) bildet, der hinter dem zuerst genannten Kissenelement (13, 13a, 13b, 13c), an dessen Flächen, die bei Verwendung der Vorrichtung beim Kopf des Kindes liegen, jeweils ein entsprechendes weiteres Kissenelement (14, 14a, 14b, 14c, 15, 15a, 16, 16a, 17, 17a, 17b) aufnimmt, das einen größeren Elastizitätskoeffizienten als das zuerst genannte Kissenelement (13, 13a, 13b, 13c) aufweist.

2. Vorrichtung nach Anspruch 1, wobei das zuerst genannte Kissenelement (13, 13a, 13b, 13c) einen Urethanschaum oder Faserverbund und jedes weitere Kissenelement (14, 14a, 14b, 14c, 15, 15a, 16, 16a, 17, 17a, 17b) Urethanplättchen, aufgeschäumte Polyethylenkugeln oder Polystyrolschaum beinhaltet.

3. Vorrichtung nach Anspruch 1 oder 2, wobei jedes weitere Kissenelement (14, 14a, 14b, 14c, 15, 15a, 16, 16a, 17, 17a, 17b) dicker als das zuerst genannte Kissenelement (13, 13a, 13b, 13c) ist.

4. Vorrichtung nach Anspruch 1, 2 oder 3, mit noch einen weiteren Kissenelement (23, 23b, 23c), das zwischen dem zuerst genannten Kissenelement (13a, 13b, 13c) und mindestens einem der genannten weiteren Kissenelemente (14a, 14b, 14c, 15a,16a, 17a, 17b) angeordnet ist und einen Elastizitätskoeffizienten aufweist, der größer als der des zuerst genannten Kissenelements (13a, 13b, 13c) und kleiner als der des genannten weiteren Kissenelements bzw. der genannten weiteren Kissenelemente (14a, 14b, 14c, 15a, 16a, 17a, 17b) ist.

5. Vorrichtung nach Anspruch 4, wobei sich das genannte noch weitere Kissenelement (23) über die gesamte rückwärtige Fläche des zuerst genannten Kissenelements (13a) erstreckt.

6. Vorrichtung nach Anspruch 4, wobei das genannte noch weitere Kissenelement (23b) lediglich bei oder um Bereiche des oberen Körpertrageabschnitts (4) und der Seitenwände (5, 6), die bei normaler Benutzung mit dem Kopf (18) des Kindes in Kontakt kommen können, und auf der genannten Endwand (7) angeordnet ist.

7. Vorrichtung nach Anspruch 4, wobei das genannte noch weitere Kissenelement (23c) lediglich bei oder um einen Bereich des oberen Körpertrageabschnitts (4) angeordnet ist, der bei normaler Verwendung mit dem Kopf (18) des Kindes in Kontakt kommen kann.

8. Vorrichtung nach einem der Ansprüche 4 bis 7, wobei das zuerst genannte (13a, 13b, 13c), das weitere (14a, 14b, 14c, 15a, 16a, 17a, 17b) und das genannte noch weitere Kissenelement (23, 23b, 23c) entsprechenderweise Urethanschaum, aufgeschäumte Polyethylenkugeln und Urethanscheibchen enthalten.

9. Vorrichtung nach einem der Ansprüche 4 bis 7, wobei das zuerst genannte (13a, 13b, 13c), das weitere (14a, 14b, 14c, 15a, 16a, 17a, 17b) und das noch weitere Kissenelement (23, 23b, 23c) entsprechenderweise einen Faserverbund, Polystyrolschaum und Urethanschaum enthalten.

10. Vorrichtung nach einem der Ansprüche 4 bis 7, wobei das zuerst genannte (13a, 13b, 13c), das weitere (14a, 14b, 14c, 15a, 16a, 17a, 17b) und das noch weitere Kissenelement (23, 23b, 23c) entsprechenderweise einen Faserverbund, Urethanscheihchen und Urethanschaum enthalten.

11. Vorrichtung nach einem der vorhergehenden Ansprüche, mit einem Sitzbett (1, 1a, 1b, 1c) für einen Babywagen.

12. Vorrichtung nach einem der vorhergehenden Ansprüche, wobei das zuerst genannte Kissenelement (13, 13a, 13b, 13c) den unteren Körpertrageabschnitt (3) den oberen Körpertrageabschnitt, die Seitenwände (5, 6) und die Endwand (7) abdeckt.

## Revendications

1. Appareil d'assistance pour enfant destiné à supporter un enfant et comprenant :
une partie de support (3) servant à supporter la partie inférieure du corps d'un enfant, une partie de support (4) servant à supporter la partie supérieure du corps de l'enfant, un couple de parois latérales (5,6) qui s'étendant à partir de zones latérales respectives de ladite partie (4) de support de la partie supérieure du corps, une paroi d'extrémité (7) qui s'étend à partir d'une zone d'extrémité de ladite partie (4) de support de la partie supérieure du corps entre des zones d'extrémité rezpectives desdites parois latérales (5,6) et un élément formant coussin (13,13a,13b,13c) recouvrant pour l'essentiel ladite partie (4) de support de la partie supérieure du corps, lesdites parois latérales (5,6) et ladite paroi d'extrémité (7);
caractérisé en ce que
chacune des parties comprenant ladite partie (4) de support de la partie supérieure du corps, lesdites parois latérales (5,6) et ladite paroi d'extrémité (7) comporte un élément de paroi rigide respectif (8,8b,8c,9, 10,11) formant une cavité (19,20,21,22) recevant un autre élément formant coussin respectif (14,14a,14b,14c,15,15a, 16,16a,17,17a,17b) en arrière dudit élément formant coussin (13,13a,13b,13c) mentionné en premier lieu, dans des zones qui sont adjacentes à la tête de l'enfant lors de l'utilisation de l'appareil, chacun desdits autres éléments formant coussins (14,14a,14b,14c,15,15a, 16,16a,17,17a,17b) possédant un coefficient d'élasticité supérieur à celui dudit élément formant coussin mentionné en premier (13,13a, 13b,13c).

2. Appareil d'assistance pour enfants selon la revendication 1, dans lequel ledit élément formant coussin mentionné en premier lieu (13,13a,13b,13c) contient une mousse d'uréthane ou un agrégat de fibres et chacun desdits autres éléments formant coussins (14,14a,14b,14c,15,15a, 16,16a,17,17a,17b) contient des copeaux d'uréthane, des billes de polyéthylène à l'état de mousse ou de la mousse de polystyrène.

3. Appareil d'assistance pour enfants selon la revendication 1 ou 2, dans lequel chacun desdits autres éléments formant coussins (14,14a,14b,14c,15,15a, 16,16a,17,17a,17b) est plus épais que ledit élément formant coussin mentionné en premier (13,13a,13b,13c).

4. Appareil d'assistance pour enfants selon la revendication 1, 2 ou 3, comprenant en outre un autre élément formant coussin (23,23b,23c) intercalé entre l'élément formant coussin mentionné en premier (13a,13b,13c) et au moins l'un desdits autres éléments formant coussins (14a,14b,14c,15a,16a,17a,17b), ledit autre élément formant coussin (23,23b,23c) possédant un coefficient d'élasticité supérieur à celui dudit élément formant coussin mentionné en premier (13a,13b,13c) et inférieur à celui desdits autres éléments formant coussins (14a,14b,14c,15a,16a,17a, 17b).

5. Appareil d'assistance pour enfants selon la revendication 4, dans lequel ledit autre élément formant coussin (23) est disposé de manière à s'étendre sur l'ensemble d'une surface arrière dudit élément formant coussin mentionné en premier (13a).

6. Appareil d'assistance pour enfants selon la revendication 4, selon lequel ledit autre élément formant coussin (23b) est disposé uniquement au niveau ou au voisinage de régions de ladite partie (4) de support de la partie supérieure du corps et desdites parois latérales (5,6) aptes à venir en contact avec la tête (18) de l'enfant pendant le fonctionnement normal et sur ladite paroi d'extrémité (7).

7. Appareil d'assistance pour enfants selon la revendication 4, dans lequel ledit autre élément formant coussin (23c) est disposé uniquement au niveau ou au voisinage d'une région de ladite partie (4) de support de la partie supérieure du corps, pouvant venir en contact avec la tête (18) de l'enfant, pendant le fonctionnement normal.

8. Appareil d'assistance pour enfants selon l'une quelconque des revendications 1 à 7, dans lequel lesdits premiers éléments formant coussins mentionnés en premier (13a,13b,13c), d'autres éléments formant coussins (14,14a, 14b,14c,15a,16a,17a,17b) et encore d'autres éléments formant coussins (23a,23b,23c) contiennent respectivement une mousse d'uréthane, des billes de polyéthylène à l'état de mousse et des copeaux d'uréthane.

9. Appareil d'assistance pour enfants selon l'une quelconque des revendications 4 à 7, dans lequel lesdits premiers éléments formant coussins mentionnés en premier (13a,13b,13c), d'autres éléments formant coussins (14,14a, 14b,14c,15a,16a,17a,17b) et encore d'autres éléments formant coussins (23a,23b,23c) contiennent respectivement un agrégat de fibres, une mousse de polystyrène et une mousse d'uréthane.

10. Appareil d'assistance pour enfants selon l'une quelconque des revendications 4 à 7, dans lequel lesdits premiers éléments formant coussins mentionnés en premier (13a,13b,13c), d'autres éléments formant coussins (14, 14a,14b,14c,15a,16a,17a,17b) et encore d'autres éléments formant coussins (23a,23b,23c) contiennent respectivement un agrégat de fibres, des copeaux d'uréthane et une mousse d'uréthane.

11. Appareil d'assistance pour enfants selon l'une quelconque des revendications précédentes, comprenant une couchette (1,1a,1b,1c) pour une poussette.

12. Appareil d'assistance pour enfants selon l'une quelconque des revendications précédentes, dans lequel ledit élément formant coussin mentionné en premier (13,13a,13b,13c) recouvre ladite partie (3) supportant la partie inférieure du corps, ladite partie supportant la partie supérieure du corps, lesdites parois latérales (5,6) et ladite paroi d'extrémité (7).
